(19) **Europäisches Patentamt / European Patent Office / Office européen des brevets**

(11) **EP 4 429 063 A1**

(12) # EUROPEAN PATENT APPLICATION
published in accordance with Art. 153(4) EPC

(43) Date of publication:
**11.09.2024 Bulletin 2024/37**

(21) Application number: **22888841.8**

(22) Date of filing: **10.06.2022**

(51) International Patent Classification (IPC):
*H02J 3/32* (2006.01)  *H02J 7/35* (2006.01)
*H02J 3/38* (2006.01)  *H02J 3/46* (2006.01)

(52) Cooperative Patent Classification (CPC):
Y02B 10/10; Y02E 10/56; Y02E 60/36; Y02E 70/30

(86) International application number:
**PCT/CN2022/098170**

(87) International publication number:
**WO 2023/077805 (11.05.2023 Gazette 2023/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.11.2021 CN 202111301881**

(71) Applicant: **Solax Power Network Technology (Zhejiang) Co., Ltd.
Hangzhou, Zhejiang 311500 (CN)**

(72) Inventors:
• **LIU, Chaohou
Hangzhou, Zhejiang 311500 (CN)**
• **AN, Tianhong
Hangzhou, Zhejiang 311500 (CN)**
• **GUAN, Haichao
Hangzhou, Zhejiang 311500 (CN)**
• **WEI, Qikang
Hangzhou, Zhejiang 311500 (CN)**
• **SHI, Xinmiao
Hangzhou, Zhejiang 311500 (CN)**

(74) Representative: **Zaboliene, Reda
Metida
Business center Vertas
Gyneju str. 16
01109 Vilnius (LT)**

(54) **ENERGY STORAGE INVERTER BATTERY CHARGE AND DISCHARGE CONTROL METHOD, AND CHARGE AND DISCHARGE CONTROL CIRCUIT**

(57) The present application relates to an energy storage inverter battery charge and discharge control method, and a charge and discharge control circuit. By means of configuring a PI control unit and using AC power as a control object to act on a battery-side control circuit on a battery side, a current control loop reference value Ibatref is formulated. By means of adjusting the current control loop reference value Ibatref of the battery-side control circuit, precise control of battery charge and discharge power is achieved, causing battery charge and discharge power to be optimally managed. In addition, the present application can manage battery energy of the energy storage inverter in a variety of application scenarios, so that energy of a photovoltaic unit preferentially meets a household load demand. Electricity is sold to a power grid unit only when there is excess photovoltaic unit energy. If electricity selling is limited, a battery unit is charged instead and excess energy is stored, achieving maximized use of the photovoltaic unit energy. When photovoltaic unit energy is insufficient, the battery unit discharges electricity to meet the demand of the household's own load, so that the electric charge overhead of the user is reduced as much as possible.

EP 4 429 063 A1

```
                                                                    ┌─ S100
        ┌────────────────────────────────────────────────┐
        │ Acquire an inverter output power Pac collected by │
        │ a second power meter, and acquire a current output │
        │ control reference value PacRef                     │
        └────────────────────────────────────────────────┘

                                                                    ┌─ S310
        ┌────────────────────────────────────────────────┐
        │ Calculate a difference between the inverter output │
        │ power Pac and the current output power control     │
        │ value PacRef                                       │
        └────────────────────────────────────────────────┘

                                                                    ┌─ S320
        ┌────────────────────────────────────────────────┐
        │ Acquire a current control loop reference value     │
        │   Ibatref of a previous time node and on the basis │
        │ of a formula 1, calculate a first battery current  │
        │ reference value Ibatref1, according to the current │
        │ control loop reference value Ibatref of the        │
        │ previous time node and the difference between the  │
        │ inverter output power Pac and the current output   │
        │ power control reference value Pacref               │
        └────────────────────────────────────────────────┘

                                                                    ┌─ S330
        ┌────────────────────────────────────────────────┐
        │ Acquire an inverter parallel port power Pexport    │
        │ collected by a third power meter, and acquire a    │
        │ battery management power control loop reference     │
        │ value Pbatexportlimt                               │
        └────────────────────────────────────────────────┘

                                                                    ┌─ S340
        ┌────────────────────────────────────────────────┐
        │ Calculate a difference between the inverter        │
        │  parallel port power Pexport and the battery       │
        │ management power control loop reference value      │
        │ Pbatexportlimt                                     │
        └────────────────────────────────────────────────┘

                                                                    ┌─ S350
        ┌────────────────────────────────────────────────┐
        │ On the basis of formula 1, calculate a second     │
        │ battery current reference value Ibatref2 according │
        │ to the current control loop reference value Ibatref │
        │ of the previous time node and the difference       │
        │  between the inverter parallel port power Pexport  │
        │ and the battery management power control loop      │
        │  reference value Pbatexportlimt                    │
        └────────────────────────────────────────────────┘

                                                                    ┌─ S360
        ┌────────────────────────────────────────────────┐
        │ Compare the first battery current reference value │
        │ Ibatref1 and the second battery current reference │
        │ value Ibatref2, and use a maximum value of the    │
        │ first battery current reference value Ibatref1 and │
        │ the second battery current reference value Ibatref2 │
        │ as the current control loop reference value        │
        │  Ibatref                                           │
        └────────────────────────────────────────────────┘

                                                                    ┌─ S500
        ┌────────────────────────────────────────────────┐
        │ Perform charge and discharge control on a  battery │
        │ unit on the basis of the current control loop      │
        │ reference value Ibatref                            │
        └────────────────────────────────────────────────┘
```

FIG. 1

**Description**

TECHNICAL FIELD

The present disclosure relates to the field of inverter energy supply technology, and more specifically relates to an energy storage inverter battery charge and discharge control method and a charge and discharge control circuit.

BACKGROUND

The charge and discharge power of the battery in the energy storage inverter may be determined comprehensively according to the information of the accessed photovoltaic panel energy, the device power of the local load accessed by the user, and the remaining power of the battery, which needs to involve a reasonable energy storage inverter battery charge and discharge control, and formulate a reasonable charge and discharge control strategy to realize it.

The traditional energy storage inverter battery charge and discharge control circuit generally takes the AC power (alternating current power) as the control object acting on the control loop on the inverter side. However, battery charge and discharge control on the inverter side can realize the power control of the inverter parallel port, but the charge and discharge power of the battery cannot be controlled in a closed-loop manner, which makes it impossible to optimize the use of photovoltaic energy. For example, there will be a battery discharge to maintain the load, while the photovoltaic energy is limited, so that although the power control of the inverter parallel port of the inverter is realized, there will be a waste of photovoltaic energy. In addition, the traditional energy storage inverter battery charge and discharge control circuit cannot meet the requirements of many power scenarios.

SUMMARY

Based on this, it is necessary to provide an energy storage inverter battery charge and discharge control method and a charge and discharge control circuit to solve the problem that the traditional energy storage inverter battery charge and discharge control circuit cannot achieve the optimal use of photovoltaic energy and the control method cannot meet the requirements of many power scenarios.

The present application provides an energy storage inverter battery charge and discharge control method, includes:

acquiring an inverter output power Pac collected by a second power meter and acquiring a current output power control reference value PacRef;

calculating a difference between the inverter output power Pac and the current output power control reference value PacRef;

acquiring a current control loop reference value Ibatref of a previous time node and on the basis of a formula 1, calculating a first battery current reference value Ibatref1, according to the current control loop reference value Ibatref of the previous time node and the difference between the inverter output power Pac and the current output power control reference value Pacref;

$$u(n) = u(n\text{-}1) + Kp \times [e(n) \text{ - } e(n\text{-}1)] + Ki \times e(n) \quad \text{formula 1;}$$

wherein u(n) is output of the PI controller, in formula 1, the first battery current reference value Ibatref1 is substituted into u (n), u(n-1) is output of the PI controller for the previous time node, the current control loop reference value Ibatref of the previous time node is substituted into u(n-1), e(n) is an error value, the difference between the inverter output power Pac and the current output power control reference value PacRef is substituted into e(n), e(n-1) is the error value of the previous time node, the difference between the inverter output power Pac and the current output power control reference value PacRef at the previous time node is substituted into e(n-1), Kp is a proportional parameter, Ki is an integral parameter;

acquiring an inverter parallel port power Pexport collected by a third power meter and acquiring a battery management power control loop reference value Pbatexportlimt;

calculating a difference between the inverter parallel port power Pexport and the battery management power control loop reference value Pbatexportlimt;

calculating a second battery current reference value Ibatref2 based on formula 1 and the current control loop reference value Ibatref of the previous time node and the difference between the inverter parallel port power Pexport and the battery management power control loop reference value Pbatexportlimt; wherein in formula 1, the second battery current reference value Ibatref2 is substituted into u (n), the current control loop reference value Ibatref of the previous time node is substituted into u(n-1), the difference between the inverter parallel port power Pexport and the battery management power control loop reference value Pbatexportlimt is substituted into e(n), the difference between the inverter parallel port power Pexport and the battery management power control loop reference value Pbatexportlimt at the previous time node is substituted into e(n-1);

comparing the first battery current reference value Ibatref1 and the second battery current reference value Ibatref2, and taking a maximum value of the first battery current reference value Ibatref1 and the second battery current reference value Ibatref2 as the current control loop reference value Ibatref;

performing charge and discharge control on a battery unit on the basis of the current control loop reference value Ibatref;

returning to an initial step after a preset time interval.

The present application further provides an energy storage inverter battery charge and discharge control circuit, wherein the circuit includes:

an inverter includes a first input terminal, a second input terminal, a first output terminal, and a second output terminal;

a photovoltaic unit includes a photovoltaic unit positive and a photovoltaic unit negative, the photovoltaic unit positive is electrically connected to the first input terminal, and the photovoltaic unit negative is electrically connected to the second input terminal;

a grid unit is connected to the first output terminal through a fire wire, the grid unit is connected to the second output terminal through a zero wire;

a battery unit includes a battery positive and a battery negative, the battery positive is connected to a connecting link between the photovoltaic unit positive and the first input terminal, and the battery negative is connected to a connecting link between the photovoltaic unit negative and the second input terminal;

a local load is arranged between the inverter and the grid unit, one end of the local load is connected to the fire wire, and another end of the local load is connected to the zero wire;

a photovoltaic side control circuit is arranged between the photovoltaic unit and the inverter;

a battery side control circuit is arranged between the battery unit and the inverter;

a grid side control circuit is arranged between the inverter and the grid unit;

a PI control unit electrically is connected to the photovoltaic side control circuit, the battery side control circuit and the grid side control circuit, the PI control unit is configured for formulating a current control loop reference value and performing charge and discharge control on the battery unit on the basis of the current control loop reference value.

The present application relates to an energy storage inverter battery charge and discharge control method, and a charge and discharge control circuit. By means of configuring a PI control unit and using AC power as a control object to act on a battery-side control circuit on a battery side, a current control loop reference value Ibatref is formulated. By means of adjusting the current control loop reference value Ibatref of the battery-side control circuit, precise control of battery charge and discharge power is achieved, causing battery charge and discharge power to be optimally managed. In addition, the present application can manage battery energy of the energy storage inverter in a variety of application scenarios, so that energy of a photovoltaic unit preferentially meets a household load demand. Electricity is sold to a power grid unit only when there is excess photovoltaic unit energy. If electricity selling is limited, a battery unit is charged instead and excess energy is stored, achieving maximized use of the photovoltaic unit energy. When photovoltaic unit energy is insufficient, the battery unit discharges electricity to meet the demand of the household's own load, so that the electric charge overhead of the user is reduced as much as possible.

BRIEF DESCRIPTION OF THE DRAWINGS

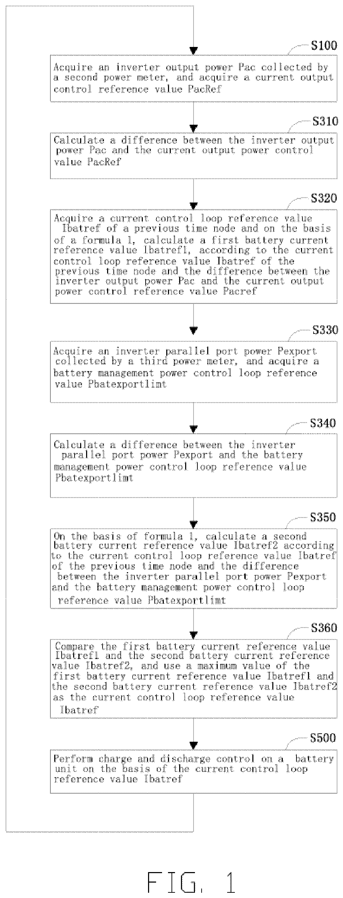

FIG. 1 is a flowchart of an energy storage inverter battery charge and discharge control method according to an embodiment of the present disclosure.

FIG. 2 is circuit structure diagram of an energy storage inverter battery charge and discharge control circuit according to an embodiment of the present disclosure.

FIG. 3 is circuit structure diagram of an energy storage inverter battery charge and discharge control circuit according to an embodiment of the present disclosure (PI control unit is omitted).

FIG. 4 is circuit structure diagram of an energy storage inverter battery charge and discharge control circuit according to an embodiment of the present disclosure (PI control unit is omitted).

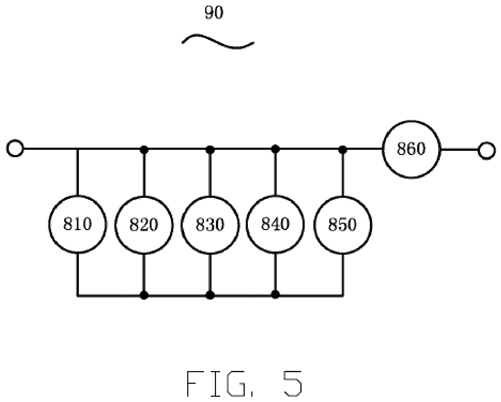

FIG. 5 is schematic diagram of a PI control unit of the energy storage inverter battery charge and discharge control circuit according to an embodiment of the present disclosure.

Reference signs:

10-inverter; 11-first input terminal; 12-second input terminal; 13-first output terminal;

14-second output terminal; 20-photovoltaic unit; 21-photovoltaic unit positive; 22-photovoltaic unit negative;

200-photovoltaic side control circuit; 210-boost circuit inductor; 220-boost circuit diode;

230-photovoltaic side capacitor; 240-first switch circuit; 241-first switch; 242-first diode;

250- voltmeter; 30-grid unit; 300-grid side control circuit; 310-second power meter;

320-third power meter; 330-first grid side switch; 340-second grid side switch;

40-battery unit; 41-battery positive; 42-battery negative; 400-battery side control circuit;

410-first wire; 420-second wire; 430-battery charge and discharge inductor; 440-ammeter;

450-second switch circuit; 451-second switch; 452-second diode; 460-battery side capacitor;

470-first power meter; 480-third switch circuit; 481-third switch; 482-third diode;

490-bus capacitor; 50-local load; 60-fire wire; 70-zero wire; 80-PI control unit;

810-first PI controller; 820-second PI controller; 830-third PI controller;

840-fourth PI controller; 850-fifth PI controller; 860-sixth PI controller.

DETAILED DESCRIPTION

In order to make the objects, technical solutions and advantages of the present disclosure clearer, the present disclosure will be described in further detail below in conjunction with the accompanying drawings and the embodiments. It should be understood that the detailed embodiments described herein are only for the purpose of explaining the present disclosure and are not intended to limit the present disclosure.

The present disclosure provides an energy storage inverter battery charge and discharge control method and a charge and discharge control circuit.

The present disclosure provides an energy storage inverter battery charge and discharge control circuit.

It should be noted that the components or devices with the same name appearing in the energy storage inverter battery charge and discharge control circuit and the energy storage inverter battery charge and discharge control method are labeled only in the part of the energy storage inverter battery charge and discharge control circuit for the sake of conciseness and are no longer labeled in the subsequent part of the energy storage inverter battery charge and discharge control method.

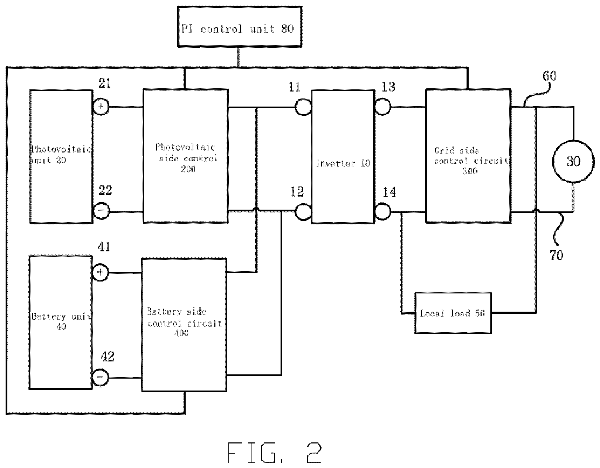

As shown in FIG. 2, in one embodiment of the present disclosure, the energy storage inverter battery charge and discharge control circuit includes an inverter 10, a photovoltaic unit 20, a grid unit 30, a battery unit 40, a local load 50, a photovoltaic side control circuit 200, a battery side control circuit 400, a grid side control circuit 300, and a PI control unit 80.

The inverter 10 includes a first input terminal 11, a second input terminal 12, a first output terminal 13, and a second output terminal 14. The photovoltaic unit 20 includes a photovoltaic unit positive 21 and a photovoltaic unit negative 22. The battery unit 40 includes a battery positive 41 and a battery negative 42.

The photovoltaic unit positive 21 is electrically connected to the first input terminal 11, and the photovoltaic unit negative 22 is electrically connected to the second input terminal 12. The grid unit 30 is connected to the first output terminal 13 via a fire wire 60. The grid unit 30 is connected to the second output terminal 14 via a zero wire 70. The battery positive 41 is connected to a connecting link between the photovoltaic unit positive 21 and the first input terminal 11. The battery negative 42 is connected to a connection link between the photovoltaic unit negative 22 and the second input terminal 12. The local load 50 is provided between the inverter 10 and the grid unit 30. One end of the local load 50 is connected to the fire wire 60, and another end of the local load 50 is connected to the zero wire 70.

The photovoltaic side control circuit 200 is arranged between the photovoltaic unit 20 and the inverter 10. The battery side control circuit 400 is arranged between the battery unit 40 and the inverter 10. The grid side control circuit 300 is arranged between the inverter 10 and the grid unit 30.

The PI control unit 80 is electrically connected to the photovoltaic side control circuit 200. The PI control unit 80 is further electrically connected to the battery side control circuit 400. The PI control unit 80 is further electrically connected to the grid side control circuit 300. The PI control unit 80 is used to formulate a current control loop reference value Ibatref. The PI control unit 80 also controls the charge and discharge of the battery unit 40 based on the current control loop reference value Ibatref.

Specifically, the charge and discharge current (hereinafter referred to as the battery current) of the battery unit 40 are bi-directional, and in the present disclosure, it is defined that when the battery current is positive, it indicates that the battery is in a charge state. When the battery current is negative, it indicates that the battery unit 40 is in a discharge state. The current control loop reference value Ibatref is greater than 0, and the battery unit 40 is in the charge state. The current control loop reference value Ibatref is less than 0, and the battery unit 40 is in the discharge state.

The main function of the inverter 10 is to invert the DC power (direct current power) into AC power (alternating current power) and incorporate it into the grid unit 30. The currents generated by the photovoltaic unit 20 and the battery unit 40 are DC currents, the grid unit 30 requires the AC current, and the inverter 10 can do the conversion of the currents.

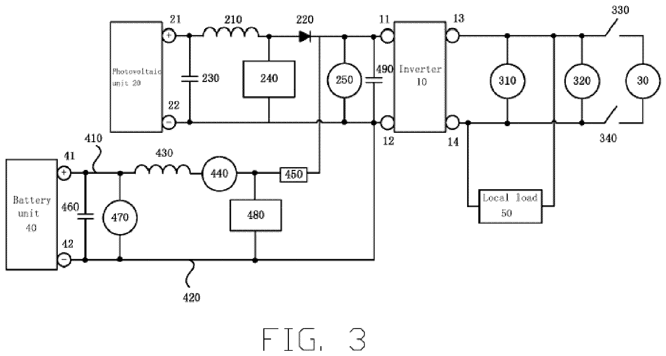

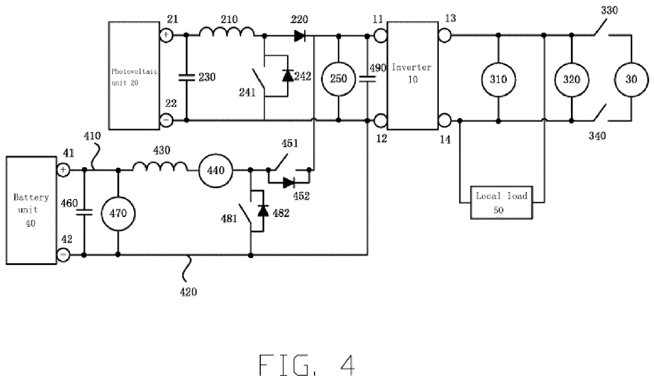

As shown in FIG. 3 and FIG. 4, in one embodiment of the present disclosure, the photovoltaic side control circuit 200 includes a boost circuit inductor 210, a boost circuit diode 220, a photovoltaic side capacitor 230, a first switch circuit 240 and a voltmeter 250.

The boost circuit inductor 210 is arranged between the photovoltaic unit positive 21 and the first input terminal 11, and the boost circuit inductor 210 is proximate to the photovoltaic unit positive 21. The boost circuit diode 220 is arranged between the photovoltaic unit positive 21 and the first input terminal 11, and the boost circuit diode 220 is proximate the first input terminal 11. The boost circuit inductor 210 is connected in series with the boost circuit diode 220.

One end of the photovoltaic side capacitor 230 is electrically connected to a connecting link between the photovoltaic unit positive 21 and the boost circuit inductor 210, another end of the photovoltaic side capacitor 230 is electrically connected to a connection link between the photovoltaic unit negative 22 and the second input terminal 12.

One end of the first switch circuit 240 is electrically connected to a connection link between the boost circuit inductor 210 and the boost circuit diode 220, another end of the first switch circuit 240 is electrically connected to a connection link between the photovoltaic unit negative 22 and the second input terminal 12. The first switch circuit 240 includes a first diode 242 and a first switch 241. The first diode 242 is electrically connected to both ends of the first switch 241.

One end of the voltmeter 250 is electrically connected to a connection link between the boost circuit diode 220 and the first input terminal 11, another end of the voltmeter 250 is electrically connected to a connection link between the photovoltaic unit negative 22 and the second input terminal 12.

As shown in FIG. 3 and FIG. 4, in one embodiment of the present disclosure, the battery side control circuit 400 includes a first wire 410 and a second wire 420. The battery side control circuit 400 further includes a battery charge and discharge inductor 430, an ammeter 440, and a second switch circuit 450 arranged on the first wire 410 and connected in series in that order. The battery side control circuit 400 further includes a first power meter 470, a third switch circuit 480, and a bus capacitor 490.

One end of the first wire 410 is connected to the battery positive 41, another end of the first wire 410 is connected to a connection link between the boost circuit diode 220 and the first input terminal 11. One end of the second wire 420 is connected to the battery negative 42, another end of the second wire 420 is connected to a connection link between the boost circuit diode 220 and the first input terminal 11.

The second switch circuit 450 includes a second switch 451 and a second diode 452. The second diode 452 is electrically connected to both ends of the second switch 451. One end of the battery side capacitor 460 is electrically connected to a connection link between the battery positive 41 and the battery charge and discharge inductor 430, and another end of the battery side capacitor 460 is electrically connected to the second wire 420. One end of the first power meter 470 is electrically connected to a connecting link between the battery positive 41 and the battery charge and discharge inductor 430, and another end of the first power meter 470 is electrically connected to the second wire 420.

One end of the third switch circuit 480 is electrically connected to a connecting link between the ammeter 440 and the second switch circuit 450, another end of the third switch circuit 480 is electrically connected to the second wire 420. The third switch circuit 480 includes a third switch 481 and a third diode 482. The third diode 482 is electrically connected to both ends of the third switch 481. One end of the bus capacitor 490 is electrically connected to a connection link between the boost circuit diode 220 and the first input terminal 11, and another end of the bus capacitor 490 is electrically connected to the second wire 420.

As shown in FIG. 3 and FIG. 4, in one embodiment of the present disclosure, the grid side control circuit 300 includes a second power meter 310, a third power meter 320, a first grid side switch 330 and a second grid side switch 340. The second power meter 310 is arranged between the grid unit 30 and the inverter 10. The second power meter 310 is specifically arranged near one side near the inverter 10. The third power meter 320 is arranged between the grid unit 30 and the inverter 10. The third power meter 320 is specifically arranged on one side near the grid unit 30. The first grid side switch 330 is arranged on the fire wire 60. The second grid side switch 340 is arranged on the zero wire 70.

The present disclosure further provides an energy storage inverter battery charge and discharge control method.

In the present disclosure, it is defined that when the battery current is positive, it indicates that the battery is in a charge state. When the battery current is negative, it indicates that the battery is in a discharge state. The current control loop reference value Ibatref is greater than 0, and the battery unit is in the charge state. The current control loop reference value Ibatref is less than 0, and the battery unit is in the discharge state.

In one embodiment of the present disclosure, the energy storage inverter battery charge and discharge control method includes S100 to S700 as follows:

At step S100, acquire an inverter output power Pac collected by a second power meter, and acquire a current output power control reference value PacRef.

Specifically, based on the reading of the second power meter, the inverter output power Pac can be acquired. If Pac is greater than 0, it means that the inverter is delivering power to the grid unit, and if Pac is less than 0, it means that the inverter is taking electricity from the grid unit.

The output power control reference value PacRef is set by reviewing the literature and data in conjunction with the specific parameters of the inverter.

The output power control reference value PacRef is different in different scenarios, so this step uses the description "current output power control reference value PacRef".

As mentioned earlier, the output power control reference value PacRef is different in different scenarios, so this step uses the description "current output power control reference value PacRef".

When the photovoltaic unit has sufficient energy and does not need to take power from the grid unit to charge the battery unit, the current output power control reference value PacRef is positive, and the current output power control reference value PacRef is equal to an upper limit value of the inverter output power. The upper limit value of the inverter output power can be set by a first power limit value and a second power limit value.

The first power limit value is limited by the factory specifications of the inverter, this is because there is a safety hazard when the inverter overheats, so the manufacturer sets a power limit when designing the inverter, which is used as the first power limit value in the embodiment. The second power limit value is limited by the grid company. Grid regulations require that the inverter needs to limit the output power when the utility frequency is too high. In the embodiment, this power limit value limited by the grid regulations is the second power limit value.

Optionally, the smallest of the first power limit value and the second power limit value is taken as the upper limit of the output power of the inverter, this is based on the barrel principle to accommodate smaller power limit values.

When the photovoltaic unit has insufficient energy and needs to take power (that is, to buy power) from the grid unit to charge the battery unit, the current output power control reference value PacRef is negative, and the former output power control reference value PacRef is specifically the battery charge power value set by the user.

The grid unit indicates the city power. When the term "city power" appears later, it is equivalent to a grid unit and will not be repeated hereafter.

At step S310, calculate a difference between the inverter output power Pac and the current output power control reference value PacRef.

Specifically, the PI control unit calculates a difference between the inverter output power Pac and the current output power control reference value PacRef. The inverter output power Pac indicates whether the inverter is taking electricity from the grid unit or transmitting power to the grid unit for sale. The inverter output power Pac is greater than 0, it indicates that the inverter transmits power to the grid unit. The inverter output power Pac is less than 0, it indicates the inverter taking electricity from the grid unit.

At step S320, acquire a current control loop reference value Ibatref of a previous time node and on the basis of a formula 1, calculate a first battery current reference value Ibatref 1, according to the current control loop reference value Ibatref of the previous time node and the difference between the inverter output power Pac and the current output power control reference value Pacref.

$$u(n) = u(n-1) + Kp \times [e(n) - e(n-1)] + Ki \times e(n) \quad \text{formula 1}$$

u(n) is the output of the PI controller. In formula 1, substitute the first battery current reference value Ibatref1 into u (n). u(n-1) is the output of the PI controller for the previous time node. Substitute the current control loop reference value Ibatref of the previous time node into u(n-1). e(n) is an error value. Substitute the difference between the inverter output power Pac and the current output power control reference value PacRef into e(n). e(n-1) is the error value of the previous time node. Substitute the difference between the inverter output power Pac and the current output power control reference value PacRef at the previous time node into e(n-1). Kp is a proportional parameter. Ki is the integral parameter.

Specifically, the current control loop reference value Ibatref for each time node may be stored in a memory of the PI control unit or in an external memory connected to the PI control unit, which may be extracted in real time.

In general, the value of e(n) - e(n-1) in formula 1 is relatively tiny, but of course tiny is relative to u(n-1) and e(n). In formula 1, since the value of e(n) - e(n-1) is negligible, then the magnitude of the value of u (n) in formula 1 is determined by the value of u(n-1) + Ki × e(n), u(n-1) is the u(n) of the previous time node, so the trend of change in u(n) is determined by the value of e(n).

When the current output power control reference value PacRef is greater than 0, the inverter output power Pac is greater than 0 or equal to 0, and the inverter is allowed to output energy to the outside world, at which time there are three cases:

1) If the inverter output power Pac is greater than the current output power control reference value PacRef, this indicates that the photovoltaic energy is too sufficient, and the inverter output power Pac exceeds the current output power control reference value PacRef, i.e., it exceeds the power limit values limited by the grid regulations. The battery charge and discharge currents are adjusted by the PI control unit based on formula 1, in order to prevent the inverter from over-selling power, and instead, the excess power is charged to the battery unit.

The difference between Pac and PacRef is positive, and e(n) is positive, u(n-1) + Ki × e(n) tends to become larger and larger, u(n) tends to increase, and the first battery current reference value Ibatref1 tends to increase. In the long run, the first battery current reference value Ibatref1 will tend to increase.

Optionally, if the battery is in a discharge state, i.e., u(n-1) is less than 0, the PI control unit controls the battery unit to reduce the discharge current and transform from the discharge state to the charge state. If the battery unit is in the charge state, the PI control unit controls the battery unit to continue to increase the charge current, until e(n) is equal to 0, and a steady state is reached.

2) If the inverter output power Pac is less than the current output power control reference value PacRef, it indicates that although the photovoltaic energy is sufficient, the inverter output power Pac does not exceed the current output power control reference value PacRef. The battery charge and discharge current can be adjusted by the PI control unit based on formula 1, to control the inverter to continue delivering power to the grid unit for sale.

The difference between Pac and PacRef is negative, and e(n) is negative, u(n-1) + Ki × e(n) tends to become smaller and smaller, u(n) tends to decrease, and the first battery current reference value Ibatref1 tends to decrease. In the long run, the first battery current reference value Ibatref1 will tend to decrease.

Optionally, if the battery unit is in the discharge state, the PI control unit controls the battery unit to increase the discharge current. If the battery unit is in the charge state, the PI control unit controls the battery unit to reduce the charge current, and gradually transforms from the charge state to the discharge state, until e(n) is equal to 0, and a steady state is reached. In other words, the battery unit tends to discharge, and the auxiliary photovoltaic unit jointly sell electricity to the grid unit, in order to reach the current output power control reference value PacRef.

3) If the inverter output power Pac is equal to the current output power control reference value PacRef, the difference between Pac and PacRef is 0, i.e., e(n) = 0, u(n) = u(n-1) (approximately equal), and the first battery current reference value Ibatref1 will remain constant.

When the current output power control reference value PacRef is less than 0, the inverter output power Pac is less than 0, and the inverter needs to take power from the grid unit (that is, buy power) to charge the battery unit. There are also three situations:

1) If the inverter output power Pac is greater than the current output power control reference value PacRef, it indicates that the inverter output power Pac has not exceeded the output power control reference value PacRef (which in this case is the battery charge power value set by the user). The battery charge current is adjusted by the PI control unit based on formula 1. This indicates that the inverter is taking electricity from the grid unit, but has not reached the battery charge power limit value.

The difference between Pac and PacRef is positive, and e(n) is positive, u(n-1) + Ki × e(n) will tend to increase, u(n) tends to increase, and the first battery current reference value Ibatref1 tends to increase. In the long run, the first battery current reference value Ibatref1 will tend to increase, the PI control unit controls the battery unit to continue to increase the charge current until e(n) is equal to 0, and the inverter output power Pac reaches the battery charge power limit value.

2) If the inverter output power Pac is less than the current output power control reference value PacRef, it indicates that although the photovoltaic energy is sufficient, the inverter output power Pac exceeds the output power control reference value PacRef (which refers to the battery charge power value set by the user). The battery charge and discharge current is adjusted by the PI control unit based on formula 1. This indicates that the inverter is taking electricity from the grid unit and is drawing too much power and needs to be adjusted.

The difference between Pac and PacRef is negative, i.e., e(n) is negative, and u(n-1) + Ki × e(n) tends to decrease, i.e., u(n) tends to decrease, and the first battery current reference value Ibatref1 tends to decrease. In the long run, the first battery current reference value Ibatref1 will tend to decrease.

The PI control unit controls the battery unit to reduce the charge current to prevent excessive power take from the grid unit and to prevent electricity bills from spiking, until e(n) is equal to 0.

3) If the inverter output power Pac is equal to the current output power control reference value PacRef, the difference between Pac and PacRef is 0, i.e., e(n) = 0, u(n) = u(n-1) (approximately equal), and the first battery current reference value Ibatref1 will remain constant.

At step S330, acquire an inverter parallel port power Pexport collected by a third power meter, and acquire a battery management power control loop reference value Pbatexportlimt.

Specifically, the inverter parallel port power Pexport represents the tendency of the local load to take and transmit electricity. The inverter parallel port power Pexport is greater than 0, it indicates that the local load supply is sufficient and the inverter is transmitting electricity to the grid unit. The inverter parallel port power Pexport is less than 0, it indicates that the local load supply is insufficient and the inverter is taking electricity to the grid unit.

At step S340, calculate a difference between the inverter parallel port power Pexport and the battery management power control loop reference value Pbatexportlimt.

Specifically, the battery management power control loop reference value Pbatexportlimt is greater than or equal to 0.

At step S350, on the basis of formula 1, calculate a second battery current reference value Ibatref2 according to the current control loop reference value Ibatref of the previous time node and the difference between the inverter parallel port power Pexport and the battery management power control loop reference value Pbatexportlimt.

In formula 1, substitute the second battery current reference value Ibatref2 into u (n). Substitute the current control loop reference value Ibatref of the previous time node into u(n-1). Substitute the difference between the inverter parallel port power Pexport and the battery management power control loop reference value Pbatexportlimt into e(n). Substitute the difference between the inverter parallel port power Pexport and the battery management power control loop reference value Pbatexportlimt at the previous time node into e(n-1).

Specifically, since formula 1 is also used in this step, the principle is the same as that of S520.

1) When the difference between the inverter parallel port power Pexport and the battery management power control loop reference value Pbatexportlimt is greater than 0, e(n) in formula 1 is greater than 0, u(n) tends to increase, the second battery current reference value Ibatref2 tends to increase, and the battery unit tends to transition to the charge state.

Since the battery management power control loop reference value Pbatexportlimt is greater than or equal to 0, the only case in which the inverter parallel port power Pexport is greater than 0. The electricity transmitted by the energy storage inverter to the grid unit is greater than the power limit, and priority needs to be given to charge the battery unit to absorb excess energy.

2) When the difference between the inverter parallel port power Pexport and the battery management power control loop reference value Pbatexportlimt is less than 0, e(n) in formula 1 is less than 0, u(n) tends to decrease, the second battery current reference value Ibatref2 tends to decrease, and the battery unit trends to transition to the discharge state. The inverter parallel port power Pexport has two situations: greater than 0 and less than 0.

If the inverter parallel port power Pexport is less than 0, it indicates that the local load is taking electricity from the grid unit to maintain operation, and the battery unit needs to transition to the discharge state to synchronously supply the local load.

If the inverter parallel port power Pexport is greater than 0, it indicates that there is no shortage of power at the local load, and the inverter is transmitting electricity to the grid unit to sell electricity, and the battery charge current needs to be reduced so that the inverter transmits more electricity to the grid unit, thereby prioritizing selling as much electricity as possible to the grid unit instead of prioritizing charging the battery unit.

At step S360, compare the first battery current reference value Ibatref1 and the second battery current reference value Ibatref2, and use a maximum value of the first battery current reference value Ibatref1 and the second battery current reference value Ibatref2 as the current control loop reference value Ibatref.

Specifically, the maximum value between the first battery current reference value Ibatref1 and the second battery current reference value Ibatref2 indicates that when the inverter output power Pac exceeds the limit value, the inverter output power Pac is reduced by decreasing the discharge power of the battery unit or switching to charging the battery unit. Priority should be given to the issue of the inverter output power Pac exceeding the limit value, followed by the consideration of the gain of the battery unit charge and discharge.

At step S500, perform charge and discharge control on a battery unit on the basis of the current control loop reference value Ibatref.

At step S700, return to step S100 after a preset time interval.

Specifically, the preset time interval can be 10 milliseconds, which means that the charge and discharge control is performed every 10 milliseconds.

Optionally, after step S500, it further includes:

At step S600, store the current control loop reference value Ibatref and the current time node relative to in a memory. The memory can be set in the PI control unit or can be independent and connected to the PI control unit.

In the embodiment, the AC power is acted as a control object on the control loop on the battery side, and the output power of the photovoltaic unit is always unrestricted, and the battery unit is discharged in a timely manner through the power closed-loop control when the local load takes electricity from the grid unit. When the inverter transmits electricity to the grid unit, the battery unit is charged in a timely manner through the power closed-loop control, during this process, the photovoltaic unit continuously tracks the maximum power point, greatly improving efficiency.

The present application relates to an energy storage inverter battery charge and discharge control method, and a charge and discharge control circuit. By means of configuring a PI control unit and using AC power as a control object to act on a battery-side control circuit on a battery side, a current control loop reference value Ibatref is formulated. By means of adjusting the current control loop reference value Ibatref of the battery-side control circuit, precise control of battery charge and discharge power is achieved, causing battery charge and discharge power to be optimally managed. In addition, the present application can manage battery energy of the energy storage inverter in a variety of application scenarios, so that energy of a photovoltaic unit preferentially meets a household load demand. Electricity is sold to a power grid unit only when there is excess photovoltaic unit energy. If electricity selling is limited, a battery unit is charged instead and excess energy is stored, achieving maximized use of the photovoltaic unit energy. When photovoltaic unit energy is insufficient, the battery unit discharges electricity to meet the demand of the household's own load, so that the electric charge overhead of the user is reduced as much as possible.

In one embodiment of the present application, S330 includes S331 to S334 as follows:

At step S331, acquire the inverter parallel port power Pexport collected by the third power meter, and acquire the inverter battery power Pbat collected by the first power meter.

At step S332, read the user working mode and determine whether the user working mode is a self-generation and self-consumption working mode or a parallel priority working mode.

Specifically, the user working mode may include the self-generation and self-consumption working mode and the parallel priority working mode.

At step S333, set the battery management power control loop reference value Pbatexportlimt to 0 if the user working mode is a self-generated and self-consumption working mode.

Specifically, when the user working mode is the self-generation and self-consumption working mode, the photovoltaic unit energy is preferentially supplied to the local load, the battery unit is charged when there is excess energy, and the battery management power control loop reference value Pbatexportlimt is set to 0.

At step S334, calculating the battery management power control loop reference value Pbatexportlimt based on formula 2 if the user working mode is the parallel priority working mode.

$$Pbatexportlimit = Pexport + 0.5 \times Pbat \text{ formula } 2$$

Pbatexportlimit is the battery management power control loop reference value. Pexport is the inverter parallel port power. Pbat is the inverter battery power.

Specifically, when the user working mode is the parallel operating mode, the photovoltaic unit energy is preferentially supplied to the local load, and then transmitted to the grid unit for electricity sales when there is excess energy. The battery management power control loop reference value Pbatexportlimt is calculated by formula 2.

It should be noted that the battery management power control loop reference value Pbatexportlimt is less than or equal to a maximum allowable sale power value Pexportlimit, and excessive selling is not allowed.

In the embodiment, the influence of the user working mode on the reference value of the battery management power control loop reference value Pbatexportlimt is increased, so as to make the battery charge and discharge control strategy of the inverter different for different user working modes, which is more in line with the actual situation.

In one embodiment of the present application, after step S360, the method further includes S410 to S430 as follows:

At step S410, acquire the maximum allowable sale power value Pexportlimit.

Specifically, the embodiment introduces a maximum allowable sale power value Pexportlimit to limit excessive electricity sales by the by the inverter.

At step S420, calculate the difference between the inverter parallel port power Pexport and the maximum allowable sale power value Pexportlimit.

Specifically, the maximum allowable sale power value Pexportlimit is set by the grid company, and the maximum allowable sale power value Pexportlimit is a maximum power value that allows the inverter to transmit electricity to the grid unit. The maximum allowable sale power value Pexportlimit is greater than 0.

At step S430, on the basis of formula 1, calculate a third battery current reference value Ibatref3 according to the current control loop reference value Ibatref of the previous time node and the difference between the inverter parallel port power Pexport and the maximum allowable sale power value Pexportlimit.

In formula 1, substitute the third battery current reference value Ibatref3 into u (n). Substitute the current control loop reference value Ibatref of the previous time node into u(n-1). Substitute the difference between the inverter parallel port power Pexport and the maximum allowable sale power value Pexportlimit into e(n). Substitute the difference between the inverter parallel port power Pexport and the maximum allowable sale power value Pexportlimit at the previous time node into e(n-1).

Specifically, the principles of this step and step S320, step S350 are the same.

When the difference between the inverter parallel port power Pexport and the maximum allowable sale power value Pexportlimit is greater than 0, e(n) tends to increase, and the third battery current reference value Ibatref3 tends to increase, which indicates that there is an over-sale of electricity, and the battery unit tends to transition to the charge state.

The difference between the inverter parallel port power Pexport and the maximum allowable sale power value Pexportlimit is less than 0, e(n) tends to decrease, the third battery current reference value Ibatref3 tends to decrease, and the battery unit tends to transition to the discharge state.

When the inverter parallel port power Pexport is less than 0, it indicates that the local load supply is insufficient, the battery unit needs to be discharged to supply the power to the load, and the battery unit tends to transition to the discharge state.

When the inverter parallel port power Pexport is greater than 0, although the local load supply is sufficient, the selling power does not reach the limit value, and the charge current is controlled to gradually decrease, the battery unit still tends to transition to the discharge state.

The embodiment introduces a maximum allowable sale power value Pexportlimit to limit excessive electricity sales by the by the inverter.

In one embodiment of the present application, after step S430, the method further includes steps S441 to S443 as follows:

At step S441, compare the second battery current reference value Ibatref2 and the third battery current reference value Ibatref3, calculate a minimum value of the second battery current reference value Ibatref2 and the third battery current reference value Ibatref3 to acquire a fourth battery current reference value Ibatref4.

At step S442, compare the first battery current reference value Ibatref1 and the fourth battery current reference value Ibatref4, calculate a maximum value of the first battery current reference value Ibatref1 and the fourth battery current reference value Ibatref4 to acquire a fifth battery current reference value Ibatref5.

At step S443, use the fifth battery current reference Ibatref5 as the current control loop reference Ibatref.

Specifically, the embodiment first takes the minimum value of the second battery current reference value Ibatref2 and the third battery current reference value Ibatref3 to acquire the fourth battery current reference value Ibatref4, which is for the battery unit to prioritize meeting the load energy supply demand. When the battery unit needs to be discharged to supply power a local load, the minimum values of Ibatref2 and Ibatref3 is taken to enable the battery unit to be discharged with as much power as possible.

The maximum value of the first battery current reference value Ibatref1 and the fourth battery current reference value Ibatref4 is taken to acquire the fifth battery current reference value Ibatref5, and the fifth battery current reference value Ibatref5 is used as the final current control loop reference value Ibatref, in order to take into account the problem of the inverter output power Pac exceeding the limit value, and secondly to consider the problem of the battery unit charge and discharge gains.

The difference between this embodiment and the embodiment of steps S100 to S360 is that, the embodiment of step S100 to S360 directly takes the maximum value of the first battery current reference value Ibatref1 and the second battery current reference value Ibatref2 as the current control loop reference value Ibatref, this embodiment is to take the minimum value of the second battery current reference value Ibatref2 and the third battery current reference value Ibatref3 to acquire the fourth battery current reference value Ibatref4, the maximum value of the first battery current reference value Ibatref1 and the fourth battery current reference value Ibatref4 is taken to acquire the fifth battery current reference value Ibatref5, and the fifth battery current reference value Ibatref5 is taken to be the final current control loop reference value Ibatref, which is more in line with the actual situation.

In one embodiment of the present application, after step S430, the method further includes steps S451 to S460 as follows:

At step S451, compare the second battery current reference value Ibatref2 and the third battery current reference value Ibatref3, and calculate the minimum value of the second battery current reference value Ibatref2 and the third battery current reference value Ibatref3 to acquire the fourth battery current reference value Ibatref4.

At step S452, compare the first battery current reference value Ibatref1 and the fourth battery current reference value Ibatref4, and calculate the maximum value of the first battery current reference value Ibatref1 and the fourth battery current reference value Ibatref4 to acquire the fifth battery current reference value Ibatref5.

Specifically, the principles of steps S451 to S450 are the same as the principles of steps S441 to S442 and will not be repeated here. This embodiment does not use the fifth battery current reference value Ibatref5 as the final current control loop reference value Ibatref, but rather has further subsequent calculations.

At step S453, acquire a bus voltage UBus collected by the voltmeter, and acquire the inverter bus voltage reference value UBUSBatRef1.

Specifically, the bus voltage UBus and the inverter bus voltage reference value UBUSBatRef1 are introduced to maintain a stable bus voltage.

At step S454, calculate a difference between the inverter bus voltage reference value UBUSBatRef1 and the bus voltage UBus.

At step S455, on the basis of formula 1, calculate an eighth battery current reference value Ibatref8 according to the current control loop reference value Ibatref of the previous time node and the difference between the inverter bus voltage reference value UBUSBatRef1 and the bus voltage UBus.

In formula 1, substitute the eighth battery current reference value Ibatref8 into $u(n)$. Substitute the current control loop reference value Ibatref of the previous time node into $u(n-1)$. Substitute the difference between the inverter bus voltage reference value UBUSBatRef1 and the bus voltage UBus into $e(n)$. Substitute the difference between the inverter bus voltage reference value UBUSBatRef1 and the bus voltage UBus at the previous time node into $e(n-1)$.

Specifically, the principles of steps S454 to S455 are the same as the principles of steps S340 to S350 and will not be repeated here.

At step S456, acquire a bus overvoltage reference value UBUSBatRef2 and calculate a difference between the bus overvoltage reference value UBUSBatRef2 and the bus voltage UBus.

Specifically, the bus overvoltage reference value UBUSBatRef2 is introduced to prevent the bus voltage from being raised too high due to excessive discharge of the battery unit. The bus overvoltage reference value UBUSBatRef2 may be the value of the inverter bus voltage reference value UBUSBatRef1 plus 20V.

At step S457, on the basis of formula 1, calculate a sixth battery current reference value Ibatref6 according to the current control loop reference value Ibatref of the previous time node and the difference between the bus overvoltage reference value UBUSBatRef2 and the bus voltage UBus.

In formula 1, substitute the sixth battery current reference value Ibatref6 into u(n). Substitute the current control loop reference value Ibatref of the previous time node into u(n-1). Substitute the difference between the bus overvoltage reference value UBUSBatRef2 and the bus voltage UBus into e(n). Substitute the difference between the bus overvoltage reference value UBUSBatRef2 and the bus voltage UBus at the previous time node into e(n-1).

Specifically, the principles of steps S454 to S455 are the same as the principles of steps S340 to S350 and will not be repeated here. When the difference between the bus overvoltage reference value UBUSBatRef2 and the bus voltage UBus is less than 0, e(n) tends to decrease, and the sixth battery current reference value Ibatref6 tends to decrease, which will cause the battery unit to transition to a discharged state, so that the bus voltage can be reduced for the purpose of preventing the bus voltage from being too high.

At step S458, take the maximum value of the fifth battery current reference value Ibatref5 and the sixth battery current reference value Ibatref6 as a seventh battery current reference value Ibatref7.

Specifically, the maximum value of the fifth battery current reference value Ibatref5 and the sixth battery current reference value Ibatref6 is taken in order to prioritize preventing high bus voltage, followed by the problem of whether the battery takes electricity from or transmits electricity to the grid unit.

At step S459, acquire a maximum allowable battery charge current value Ichargelimit, take a minimum value of the seventh battery current reference value Ibatref7, the eighth battery current reference value Ibatref8, and the maximum allowable battery charge current value Ichargelimit as a ninth battery current reference value Ibatref9.

Specifically, the maximum allowable battery charge current value Ichargelimit may be formulated by one or more of a maximum charge current value defined by a specification, a maximum charge current value limited by machine over-temperature, a maximum charge current limited on the battery side due to high battery capacity, and a maximum charge current limited by the cell temperature.

The significance of the setting of the maximum allowable battery charge current value Ichargelimit is to limit the charge current and prevent the battery unit from discharging excessively.

At step S460, acquire a maximum allowable battery discharge current limit value Idischargelimit and take a maximum value of the ninth battery current reference value Ibatref9 and the maximum allowable battery discharge current limit value Idischargelimit as the battery current control loop reference value Ibatref.

Specifically, the maximum allowable battery discharge current limit value Idischargelimit may be formulated by one or more of a maximum discharge current value defined by a specification, a maximum discharge current value limited by machine over-temperature, a maximum discharge current limited on the battery side due to low battery capacity, and a maximum discharge current limited by the cell temperature.

The significance of the setting of the maximum allowable battery discharge current limit value Idischargelimit is to limit the discharge current and prevent the battery unit from discharging excessively. The maximum allowable battery discharge current limit value Idischargelimit is a negative value.

In summary, the battery unit is in a charge state when both the seventh battery current reference value Ibatref7 and the eighth battery current reference value Ibatref8 are the positive value. The maximum allowable battery discharge current limit value Idischargelimit cannot function, but the maximum allowable battery charge current value Ichargelimit can function. The minimum value of the seventh battery current reference value Ibatref7, the eighth battery current reference value Ibatref8, and the maximum allowable battery discharge current limit value Idischargelimit is taken to limit the maximum charge current.

In contrast, the battery unit is in a discharged state when both the seventh battery current reference value Ibatref7 and the eighth battery current reference value Ibatref8 are the negative value. The maximum allowable battery charge current value Ichargelimit cannot function, but the maximum allowable battery discharge current limit value Idischargelimit can function, and the maximum value of the ninth battery current reference value Ibatref9 and the maximum allowable battery charge current value Ichargelimit is taken to limit the maximum discharge current. The ninth battery current reference value Ibatref9 is acquired by taking the minimum value of the seventh battery current reference value Ibatref7 and the eighth battery current reference value Ibatref8, which can ensure that the battery unit releases as much energy as possible and discharges at maximum power without exceeding the maximum allowable battery discharge current limit value Idischargelimit.

In one embodiment of the present application, the step S500 includes:

At step S510, acquire a duty cycle of the second switch at the previous time node, acquire the battery current value Ibat collected by the ammeter, and calculate a difference between the current control loop reference value Ibatref and the battery current value Ibat.

At step S520, on the basis of formula 1, calculate the duty cycle of the second switch according to the duty cycle of the second switch of the previous time node and the difference between the current control loop reference value Ibatref and the battery current value Ibat.

In formula 1, substitute the duty cycle of the second switch into u(n). Substitute the duty cycle of the second switch of the previous time node into u(n-1). Substitute the difference between the current control loop reference value Ibatref and the battery current value Ibat into e(n). Substitute the difference between the current control loop reference value Ibatref and the battery current value Ibat at the previous time node into e(n-1). At step S530, adjust the battery current value Ibat based on the duty cycle of the second switch.

Specifically, the duty cycle of the second switch and the duty cycle of the third switch are in a complementary relationship. Therefore, only the duty cycle of the second switch needs to be determined, and the duty cycle of the third switch can be calculated through the complementary relationship between the duty cycle of the second switch and the duty cycle of the third switch.

Step S530 adjusts the battery current value Ibat based on the duty cycle of the second switch and the duty cycle of the third switch, which can control the charge and discharge of the battery. It can be seen that the battery current value Ibat is dynamically changed.

Optionally, the PI control unit includes a total of six PI controllers, namely a first PI controller 810, a second PI controller 820, a third PI controller 830, a fourth PI controller 840, a fifth PI controller 850, and a sixth PI controller 860.

When step S320 is executed, calculating the first battery current reference value Ibatref1 is executed by the first PI controller 810.

When S350 is executed, calculating the second battery current reference value Ibatref2 is executed by the second PI controller 820.

When S430 is executed, calculating the third battery current reference value Ibatref3 is executed by the third PI controller 830.

When S455 is executed, calculating the eighth battery current reference value Ibatref8 is executed by the fourth PI controller 840.

When S457 is executed, calculating the sixth battery current reference value Ibatref6 is executed by the fifth PI controller 850.

When S520 is executed, calculating the duty cycle of the second switch is executed by the sixth PI controller 860.

The first PI controller 810, the second PI controller 820, the third PI controller 830, the fourth PI controller 840, and the fifth PI controller 850 are first connected in parallel with each other and finally connected in series with the sixth PI controller 860.

The technical features of the embodiments described above may be arbitrarily combined, and the method steps are not limited in the order of execution. To make the description concise, all possible combinations of various technical features in the above embodiments have not been described. However, as long as there are no contradictions in the combinations of these technical features, they should be considered within the scope of this specification.

The above embodiments only express several embodiments of the present application, and their descriptions are more specific and detailed, but cannot be understood as limiting the scope of the present application. For ordinary technical personnel in this field, several modifications and improvements can be made without departing from the concept of the present application, all of which fall within the scope of protection of present application. Therefore, the scope of protection of the present application should be based on the attached claims.

**Claims**

**1.** An energy storage inverter battery charge and discharge control method comprising:

acquiring an inverter output power Pac collected by a second power meter and acquiring a current output power control reference value PacRef;

calculating a difference between the inverter output power Pac and the current output power control reference value PacRef;

acquiring a current control loop reference value Ibatref of a previous time node and on the basis of a formula 1, calculating a first battery current reference value Ibatref 1, according to the current control loop reference value Ibatref of the previous time node and the difference between the inverter output power Pac and the current output power control reference value Pacref;

$$u(n) = u(n-1) + Kp \times [e(n) - e(n-1)] + Ki \times e(n) \qquad \text{formula 1;}$$

wherein $u(n)$ is output of the PI controller, in formula 1, the first battery current reference value Ibatref1 is substituted into $u(n)$, $u(n-1)$ is output of the PI controller for the previous time node, the current control loop reference value Ibatref of the previous time node is substituted into $u(n-1)$, $e(n)$ is an error value, the difference between the inverter output power Pac and the current output power control reference value PacRef is substituted into $e(n)$, $e(n-1)$ is the error value of the previous time node, the difference between the inverter output power Pac and the current output power control reference value PacRef at the previous time node is substituted into $e(n-1)$, Kp is a proportional parameter, Ki is an integral parameter;

acquiring an inverter parallel port power Pexport collected by a third power meter and acquiring a battery management power control loop reference value Pbatexportlimt;

calculating a difference between the inverter parallel port power Pexport and the battery management power control loop reference value Pbatexportlimt;

calculating a second battery current reference value Ibatref2 based on formula 1 and the current control loop reference value Ibatref of the previous time node and the difference between the inverter parallel port power Pexport and the battery management power control loop reference value Pbatexportlimt; wherein in formula 1, the second battery current reference value Ibatref2 is substituted into $u(n)$, the current control loop reference value Ibatref of the previous time node is substituted into $u(n-1)$, the difference between the inverter parallel port power Pexport and the battery management power control loop reference value Pbatexportlimt is substituted into $e(n)$, the difference between the inverter parallel port power Pexport and the battery management power control loop reference value Pbatexportlimt at the previous time node is substituted into $e(n-1)$;

comparing the first battery current reference value Ibatref1 and the second battery current reference value Ibatref2, and taking a maximum value of the first battery current reference value Ibatref1 and the second battery current reference value Ibatref2 as the current control loop reference value Ibatref;

performing charge and discharge control on a battery unit on the basis of the current control loop reference value Ibatref;

returning to an initial step after a preset time interval.

2. The energy storage inverter battery charge and discharge control method according to claim 1, wherein acquiring the inverter parallel port power Pexport collected by the third power meter and acquiring the battery management power control loop reference value Pbatexportlimt, comprises:

acquiring an inverter parallel port power Pexport collected by the third power meter, and acquiring an inverter battery power Pbat collected by a first power meter;

reading a user working mode and determining whether the user working mode is a self-generation and self-consumption working mode or a parallel priority working mode;

setting the battery management power control loop reference value Pbatexportlimt to 0 if the user working mode is the self-generated and self-consumption working mode;

calculating the battery management power control loop reference value Pbatexportlimt based on formula 2 if the user working mode is the parallel priority working mode;

$$\text{Pbatexportlimit} = \text{Pexport} + 0.5 \times \text{Pbat} \qquad \text{formula 2;}$$

wherein Pbatexportlimit is the battery management power control loop reference value, Pexport is the inverter parallel port power, Pbat is the inverter battery power.

3. The energy storage inverter battery charge and discharge control method according to claim 2, wherein after comparing the first battery current reference value Ibatref1 and the second battery current reference value Ibatref2, and taking the maximum value of the first battery current reference value Ibatref1 and the second battery current reference value Ibatref2 as the current control loop reference value Ibatref, further comprises:

acquiring a maximum allowable sale power value Pexportlimit;

calculating the difference between the inverter parallel port power Pexport and the maximum allowable sale power value Pexportlimit;

calculating a third battery current reference value Ibatref3 based on formula 1 and the current control loop reference value Ibatref of the previous time node and the difference between the inverter parallel port power Pexport and the maximum allowable sale power value Pexportlimit; wherein in formula 1, the third battery current reference value Ibatref3 is substituted into u (n), the current control loop reference value Ibatref of the previous time node is substituted into u(n-1), the difference between the inverter parallel port power Pexport and the maximum allowable sale power value Pexportlimit is substituted into e(n), the difference between the inverter parallel port power Pexport and the maximum allowable sale power value Pexportlimit at the previous time node is substituted into e(n-1).

4. The energy storage inverter battery charge and discharge control method according to claim 3, wherein after calculating the third battery current reference value Ibatref3 based on formula 1 and the current control loop reference value Ibatref of the previous time node and the difference between the inverter parallel port power Pexport and the maximum allowable sale power value Pexportlimit, further comprises:

comparing the second battery current reference value Ibatref2 and the third battery current reference value Ibatref3, calculating a minimum value of the second battery current reference value Ibatref2 and the third battery current reference value Ibatref3 to acquire a fourth battery current reference value Ibatref4;
comparing the first battery current reference value Ibatref1 and the fourth battery current reference value Ibatref4, calculating a maximum value of the first battery current reference value Ibatref1 and the fourth battery current reference value Ibatref4 to acquire a fifth battery current reference value Ibatref5;
taking the fifth battery current reference Ibatref5 as the current control loop reference Ibatref.

5. The energy storage inverter battery charge and discharge control method according to claim 3, wherein after calculating the third battery current reference value Ibatref3 based on formula 1 and the current control loop reference value Ibatref of the previous time node and the difference between the inverter parallel port power Pexport and the maximum allowable sale power value Pexportlimit, further comprises:

comparing the second battery current reference value Ibatref2 and the third battery current reference value Ibatref3, and calculating a minimum value of the second battery current reference value Ibatref2 and the third battery current reference value Ibatref3 to acquire a fourth battery current reference value Ibatref4;
comparing the first battery current reference value Ibatref1 and the fourth battery current reference value Ibatref4, and calculating a maximum value of the first battery current reference value Ibatref1 and the fourth battery current reference value Ibatref4 to acquire a fifth battery current reference value Ibatref5;
acquiring a bus voltage UBus collected by a voltmeter, and acquiring an inverter bus voltage reference value UBUSBatRefl;
calculating a difference between the inverter bus voltage reference value UBUSBatRef1 and the bus voltage UBus;
calculating an eighth battery current reference value Ibatref8 based on formula 1 and the current control loop reference value Ibatref of the previous time node and the difference between the inverter bus voltage reference value UBUSBatRef1 and the bus voltage UBus; wherein in formula 1, the eighth battery current reference value Ibatref8 is substituted into u(n), the current control loop reference value Ibatref of the previous time node is substituted into u(n-1), the difference between the inverter bus voltage reference value UBUSBatRef1 and the bus voltage UBus is substituted into e(n), the difference between the inverter bus voltage reference value UBUSBatRef1 and the bus voltage UBus at the previous time node is substituted into e(n-1);
acquiring a bus overvoltage reference value UBUSBatRef2 and calculating a difference between the bus overvoltage reference value UBUSBatRef2 and the bus voltage UBus;
calculating a sixth battery current reference value Ibatref6 based on formula 1 and the current control loop reference value Ibatref of the previous time node and the difference between the bus overvoltage reference value UBUSBatRef2 and the bus voltage UBus; wherein in formula 1, the sixth battery current reference value Ibatref6 is substituted into u(n), the current control loop reference value Ibatref of the previous time node is substituted into u(n-1), the difference between the bus overvoltage reference value UBUSBatRef2 and the bus voltage UBus is substituted into e(n), the difference between the bus overvoltage reference value UBUSBatRef2 and the bus voltage UBus at the previous time node is substituted into e(n-1);
taking a maximum value of the fifth battery current reference value Ibatref5 and the sixth battery current reference value Ibatref6 as a seventh battery current reference value Ibatref7;
acquiring a maximum allowable battery charge current value Ichargelimit and taking a minimum value of the seventh battery current reference value Ibatref7, the eighth battery current reference value Ibatref8, and the maximum allowable battery charge current value Ichargelimit as a ninth battery current reference value Ibatref9;
acquiring a maximum allowable battery discharge current limit value Idischargelimit and taking a maximum value of the ninth battery current reference value Ibatref9 and the maximum allowable battery discharge current limit value Idischargelimit as the battery current control loop reference value Ibatref.

6. The energy storage inverter battery charge and discharge control method according to any one of claims 4 or 5, wherein performing charge and discharge control on the battery unit on the basis of the current control loop reference value Ibatref, further comprises:

acquiring a duty cycle of a second switch at the previous time node, acquiring a battery current value Ibat collected by an ammeter, and calculating a difference between the current control loop reference value Ibatref and the battery current value Ibat;

calculating the duty cycle of the second switch based on formula 1 and the duty cycle of the second switch of the previous time node and the difference between the current control loop reference value Ibatref and the battery current value Ibat; wherein in formula 1, the duty cycle of the second switch is substituted into u(n), the duty cycle of the second switch of the previous time node is substituted into u(n-1), the difference between the current control loop reference value Ibatref and the battery current value Ibat is substituted into e(n), the difference between the current control loop reference value Ibatref and the battery current value Ibat at the previous time node is substituted into e(n-1);

adjusting the battery current value Ibat based on the duty cycle of the second switch.

7. An energy storage inverter battery charge and discharge control circuit comprising:

an inverter comprising a first input terminal, a second input terminal, a first output terminal, and a second output terminal;

a photovoltaic unit comprising a photovoltaic unit positive and a photovoltaic unit negative, the photovoltaic unit positive electrically connected to the first input terminal, and the photovoltaic unit negative electrically connected to the second input terminal;

a grid unit connected to the first output terminal through a fire wire, the grid unit further connected to the second output terminal through a zero wire;

a battery unit comprising a battery positive and a battery negative, the battery positive connected to a connecting link between the photovoltaic unit positive and the first input terminal, and the battery negative connected to a connecting link between the photovoltaic unit negative and the second input terminal;

a local load arranged between the inverter and the grid unit, one end of the local load connected to the fire wire, and another end of the local load connected to the zero wire;

a photovoltaic side control circuit arranged between the photovoltaic unit and the inverter;

a battery side control circuit arranged between the battery unit and the inverter;

a grid side control circuit arranged between the inverter and the grid unit;

a PI control unit electrically connected to the photovoltaic side control circuit, the battery side control circuit and the grid side control circuit, the PI control unit configured for formulating a current control loop reference value and performing charge and discharge control on the battery unit on the basis of the current control loop reference value.

8. The energy storage inverter battery charge and discharge control circuit according to claim 7, wherein the photovoltaic side control circuit comprises:

a boost circuit inductor, the boost circuit inductor is arranged between the photovoltaic unit positive and the first input terminal, and the boost circuit inductor is proximate to the photovoltaic unit positive;

a boost circuit diode, the boost circuit diode is arranged between the photovoltaic unit positive and the first input terminal, the boost circuit diode is proximate to the first input terminal, and the boost circuit inductor is connected in series with the boost circuit diode;

a photovoltaic side capacitor, one end of the photovoltaic side capacitor is electrically connected to a connecting link between the photovoltaic unit positive and the boost circuit inductor, another end of the photovoltaic side capacitor is electrically connected to a connection link between the photovoltaic unit negative and the second input terminal;

a first switch circuit, one end of the first switch circuit is electrically connected to a connection link between the boost circuit inductor and the boost circuit diode, another end of the first switch circuit is electrically connected to a connection link between the photovoltaic unit negative and the second input terminal, the first switch circuit comprises a first diode and a first switch, the first diode is electrically connected to both ends of the first switch;

a voltmeter, one end of the voltmeter is electrically connected to a connection link between the boost circuit diode and the first input terminal, another end of the voltmeter is electrically connected to a connection link between the photovoltaic unit negative and the second input terminal.

9. The energy storage inverter battery charge and discharge control circuit according to claim 8, wherein the battery side control circuit comprises:

a first wire, the boost circuit inductor is arranged between the photovoltaic unit positive and the first input terminal, and the boost circuit inductor is proximate to the photovoltaic unit positive;
a second wire, one end of the first wire is connected to the battery positive, another end of the first wire is connected to a connection link between the boost circuit diode and the first input terminal;
a photovoltaic side capacitor, one end of the second wire is connected to the battery negative, another end of the second wire is connected to a connection link between the boost circuit diode and the first input terminal;
a battery charge and discharge inductor, an ammeter, and a second switch circuit arranged on the first wire and sequentially connected in series; the second switch circuit comprises a second switch and a second diode, the second diode is electrically connected to both ends of the second switch;
a battery side capacitor, one end of the battery side capacitor is electrically connected to a connection link between the battery positive and the battery charge and discharge inductor, and another end of the battery side capacitor is electrically connected to the second wire;
a first power meter, one end of the first power meter is electrically connected to a connecting link between the battery positive and the battery charge and discharge inductor, and another end of the first power meter is electrically connected to the second wire;
a third switch circuit, one end of the third switch circuit is electrically connected to a connecting link between the ammeter and the second switch circuit, another end of the third switch circuit is electrically connected to the second wire, the third switch circuit comprises a third switch and a third diode, and the third diode is electrically connected to both ends of the third switch;
a bus capacitor, one end of the bus capacitor is electrically connected to a connection link between the boost circuit diode and the first input terminal, and another end of the bus capacitor is electrically connected to the second wire.

10. The energy storage inverter battery charge and discharge control circuit according to claim 9, wherein the grid side control circuit comprises:

a second power meter, the second power meter is arranged between the grid unit and the inverter, and the second power meter is specifically arranged one side near the inverter;
a third power meter, the third power meter is arranged between the grid unit and the inverter, and the third power meter is specifically arranged on one side near the grid unit;
a first grid side switch, the first grid side switch is arranged on the fire wire;
a second grid side switch, the second grid side switch is arranged on the zero wire.

```
                                                      ┌─ S100
                          ┌──────────────────────────────────┐
                          │ Acquire an inverter output power Pac collected by │
                          │ a second power meter, and acquire a current output │
                          │ control reference value PacRef │
                          └──────────────────────────────────┘
                                                      ┌─ S310
                          ┌──────────────────────────────────┐
                          │ Calculate a difference between the inverter output │
                          │ power Pac and the current output power control │
                          │ value PacRef │
                          └──────────────────────────────────┘
                                                      ┌─ S320
                          ┌──────────────────────────────────┐
                          │ Acquire a current control loop reference value │
                          │  Ibatref of a previous time node and on the basis │
                          │ of a formula 1, calculate a first battery current │
                          │ reference value Ibatref1, according to the current │
                          │ control loop reference value Ibatref of the │
                          │ previous time node and the difference between the │
                          │ inverter output power Pac and the current output │
                          │ power control reference value Pacref │
                          └──────────────────────────────────┘
                                                      ┌─ S330
                          ┌──────────────────────────────────┐
                          │ Acquire an inverter parallel port power Pexport │
                          │ collected by a third power meter, and acquire a │
                          │ battery management power control loop reference │
                          │ value Pbatexportlimt │
                          └──────────────────────────────────┘
                                                      ┌─ S340
                          ┌──────────────────────────────────┐
                          │ Calculate a difference between the inverter │
                          │  parallel port power Pexport and the battery │
                          │ management power control loop reference value │
                          │ Pbatexportlimt │
                          └──────────────────────────────────┘
                                                      ┌─ S350
                          ┌──────────────────────────────────┐
                          │ On the basis of formula 1, calculate a second │
                          │ battery current reference value Ibatref2 according │
                          │ to the current control loop reference value Ibatref │
                          │ of the previous time node and the difference │
                          │  between the inverter parallel port power Pexport │
                          │ and the battery management power control loop │
                          │  reference value Pbatexportlimt │
                          └──────────────────────────────────┘
                                                      ┌─ S360
                          ┌──────────────────────────────────┐
                          │ Compare the first battery current reference value │
                          │ Ibatref1 and the second battery current reference │
                          │ value Ibatref2, and use a maximum value of the │
                          │ first battery current reference value Ibatref1 and │
                          │ the second battery current reference value Ibatref2 │
                          │ as the current control loop reference value │
                          │  Ibatref │
                          └──────────────────────────────────┘
                                                      ┌─ S500
                          ┌──────────────────────────────────┐
                          │ Perform charge and discharge control on a  battery │
                          │ unit on the basis of the current control loop │
                          │ reference value Ibatref │
                          └──────────────────────────────────┘
```

FIG. 1

FIG. 2

FIG. 3

FIG. 4

90

FIG. 5

## INTERNATIONAL SEARCH REPORT

| International application No. |
| --- |
| **PCT/CN2022/098170** |

**A. CLASSIFICATION OF SUBJECT MATTER**

H02J 3/32(2006.01)i; H02J 7/35(2006.01)i; H02J 3/38(2006.01)i; H02J 3/46(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT: 艾罗, 光伏, 太阳能, 电池, 储能, 逆变器, 并网, 功率, 差, 比例, 积分, PI, 电流, 参考, photovoltaic, solar, battery, storage, inverter, grid, connect, power, difference, current, reference

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114039371 A (ZHEJIANG SOLAX POWER NETWORK ENERGY TECHNOLOGY CO., LTD.) 11 February 2022 (2022-02-11)<br>claims 1-10 | 1-10 |
| X | CN 111725865 A (SHENZHEN SRNE SOLAR CO., LTD.) 29 September 2020 (2020-09-29)<br>description, paragraphs [0073]-[0155], and figures 1-10 | 7-10 |
| A | CN 111725865 A (SHENZHEN SRNE SOLAR CO., LTD.) 29 September 2020 (2020-09-29)<br>description, paragraphs [0073]-[0155], and figures 1-10 | 1-6 |
| A | CN 107332270 A (EATON PHOENIXTEC MMLP CO., LTD.) 07 November 2017 (2017-11-07)<br>entire document | 1-10 |
| A | KR 101964740 B1 (DIK CO., LTD.) 03 April 2019 (2019-04-03)<br>entire document | 1-10 |
| A | CN 103986136 A (INSTITUTE OF ELECTRIC POWER RESEARCH, YUNNAN PROVINCIAL ELECTRIC POWER TEST & RESEARCH INSTITUTE (GROUP) CO., LTD. et al.) 13 August 2014 (2014-08-13)<br>entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 August 2022** | **31 August 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/098170**

| Patent document cited in search report | | | Publication date (day/month/year) | Patent family member(s) | | | Publication date (day/month/year) |
|---|---|---|---|---|---|---|---|
| CN | 114039371 | A | 11 February 2022 | None | | | |
| CN | 111725865 | A | 29 September 2020 | None | | | |
| CN | 107332270 | A | 07 November 2017 | WO | 2017185966 | A1 | 02 November 2017 |
| KR | 101964740 | B1 | 03 April 2019 | None | | | |
| CN | 103986136 | A | 13 August 2014 | CN | 103986136 | B | 28 July 2017 |

Form PCT/ISA/210 (patent family annex) (January 2015)